# EUROPEAN PATENT SPECIFICATION

(11) **EP 1 744 264 B1**
(45) Date of publication and mention of the grant of the patent: **18.12.2013**
(21) Application number: 06010685.3
(22) Date of filing: 23.05.2006
(51) Int. Cl.: G06K 9/00, G07C 9/00

(54) **Biometric information registration apparatus and method**
Vorrichtung und Verfahren zur Aufzeichnung biometrischer Informationen
Appareil et méthode d'enregistrement de l'information biométrique

(30) Priority: 13.07.2005 JP 2005203796
(43) Date of publication of application: 17.01.2007
(73) Proprietor: Hitachi-Omron Terminal Solutions, Corp., Shinagawa-ku Tokyo 141-0032 (JP)
(72) Inventor: Nakazawa, Tatsuyuki Hitachi, Ltd. IPO, 1-chome, Chiyoda-ku Tokyo 100-8220 (JP); Yazumi, Kazuyuki Hitachi, Ltd. IPO, 1-chome, Chiyoda-ku Tokyo 100-8220 (JP)
(74) Representative: Strehl Schübel-Hopf & Partner

(56) References cited:
- EP-A- 0 999 528
- EP-A- 1 018 297
- GB-A- 2 314 661

## Description

### BACKGROUND OF THE INVENTION

### Field of the Invention

The present invention relates to a registration apparatus for registering biometric information and a reading apparatus for reading biometric information.

### Description of the Related Art

In the case where, for example, one piece of fingerprint information is registered as biometric information, a finger to be registered is selected and the corresponding finger is set to a biometric information reading apparatus for registration. Further, in the case where plural pieces of fingerprint information are registered, the selection of a finger and the registration thereof are repeated. This related art is disclosed in a patent reference (Japanese Patent Application Laid-Open No. 2003-248662).

### SUMMARY OF THE INVENTION

In the above patent reference, if a region (finger) is set to the biometric information reading apparatus for registration without knowing that the region is a wrong one, it is impossible to find the wrong registration until the result of collation shows mismatching after setting a correct region in reading and collating biometric information.

GB-A-2 314 661 discloses a fingerprint capture system in line with the preamble of present claim 1.

The object of the present invention is to provide a biometric information registration apparatus capable of preventing a wrong registration of biometric information of a region.

In order to achieve the above-described object, the present invention adopts a configuration as defined in the apparatus of claim 1 and the method of claim 6. In general, a region whose biometric information is registered is accepted, read means reads the biometric information, an image of the read means is photographed, the region whose biometric information was read is discriminated on the basis of the photographed image, and it is determined whether or not the input region matches the region whose biometric information was read. The subclaims relate to preferred embodiments.

### BRIEF DESCRIPTION OF THE DRAWINGS

Fig. 1 is a functional block diagram of the registration apparatus 101 of finger vein information that is one embodiment of the present invention.
Fig. 2 is an external view of the registration apparatus 101 of Fig. 1.
Fig. 3 is a flowchart of issuing processes of an IC card in which finger vein information is registered by the registration apparatus 101.
Figs. 4 is photographed images in a state where a finger is set to the finger vein reader 102.
Fig. 5 is a guidance screen of registration confirmation for finger vein information corresponding to a state of a finger that is set to the finger vein reader 102.
Fig. 6 an external view of an automated teller machine (ATM) for collating finger vein information that is one embodiment of the present invention.
Fig. 7 a flowchart showing collation processes of finger vein information performed by the ATM of Fig. 6.

### DESCRIPTION OF PREFERRED EMBODIMENTS

Hereinafter, one embodiment of the present invention will be described in detail on the basis of the drawings by taking a registration apparatus of finger vein information as an example with the use of finger vein information as biometric information.

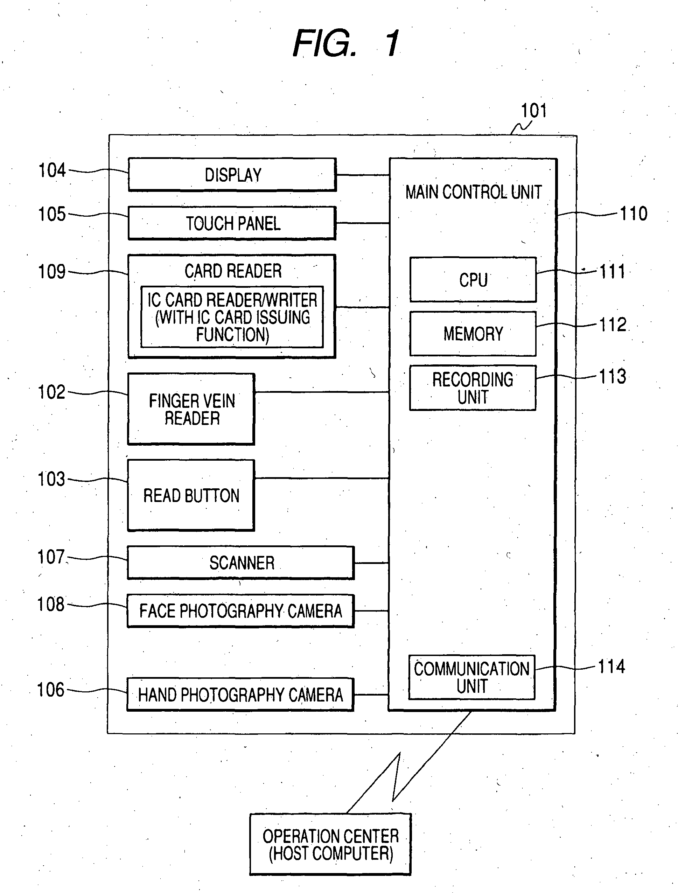

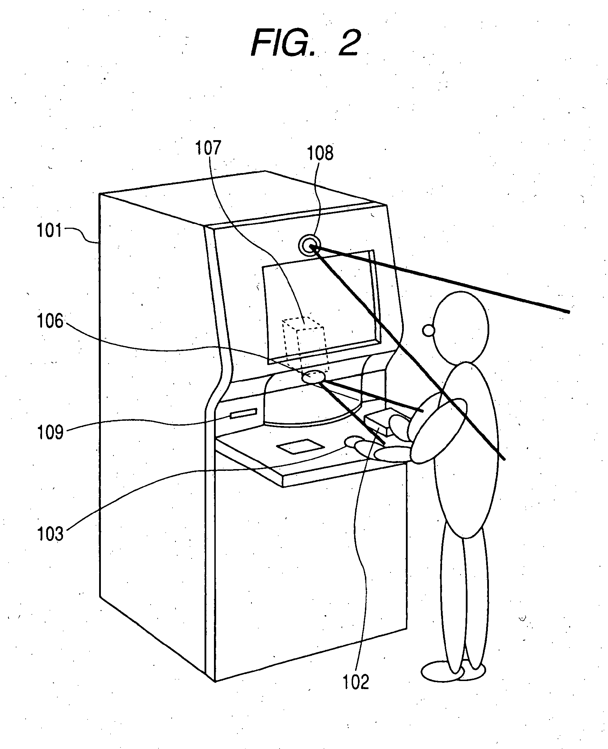

Fig. 1 shows a functional block diagram of a registration apparatus 101 of finger vein information. The registration apparatus 101 is composed of a finger vein reader 102 for reading finger vein information, a read button 103 for instructing to start reading the finger vein information, a display 104 that is a display unit for displaying an operational guidance of the apparatus, a touch panel 105 on which registration content is selected and that is an input unit with which a user inputs a personal identification number and the like, a hand photography camera 106 for photographing a setting state of a finger in the finger vein reader, a scanner 107 that is a document reader for reading documents such as certificates by which a user is identified as the user himself/herself, a face photography camera 108 for photographing a face image of the user, a card reader/writer 109 for issuing an IC card in which finger vein information is written and for reading or writing into the issued card, and a main control unit 110 for controlling each unit of the registration apparatus 101 and for performing communications with a host computer. Further, the main control unit 110 is composed of a CPU 111, a memory 112, a recording unit 113, and a communication unit 114. Fig. 2 shows an external view of the registration apparatus 101.

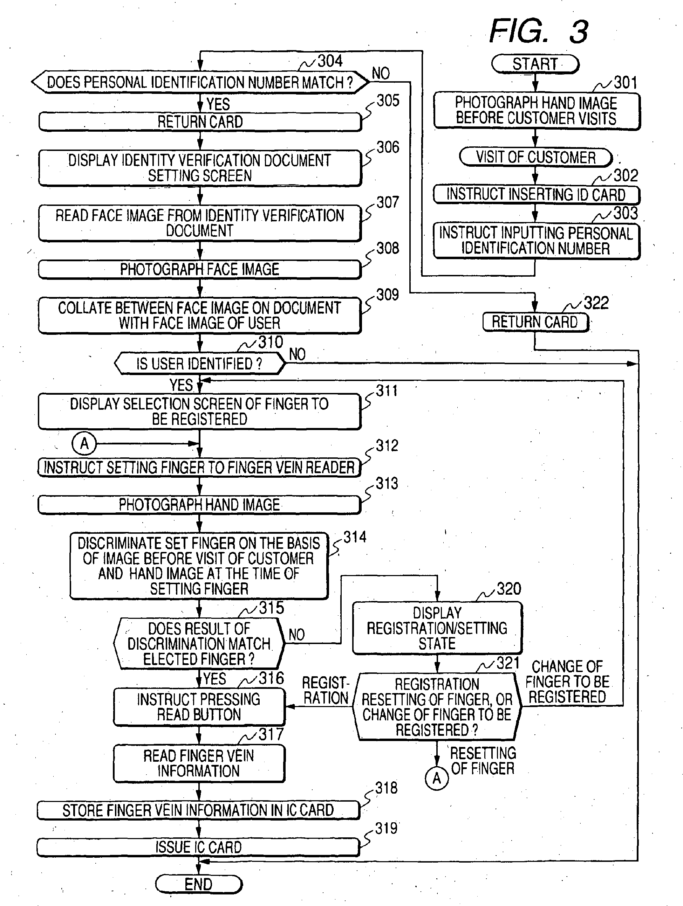

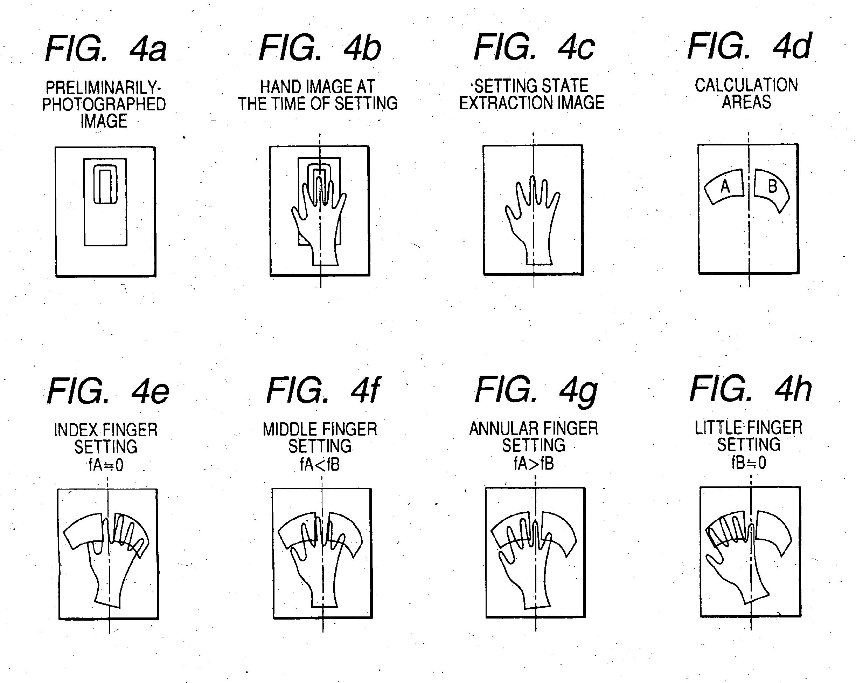

Fig. 3 shows a flow of registration processes in which the registration apparatus 101 registers finger vein information and issuing processes of an IC card in which the finger vein information is stored. The flow of Fig. 3 will be described by appropriately referring to Fig. 4 that shows states in which the finger vein reader 102 is photographed by the hand photography camera 106.

As a preliminary process, the hand photography camera 106 photographs an image (Fig. 3a) of the finger vein reader 102 in a state where no finger is set thereto (Step 301), and the registration apparatus 101 gets ready for customers. When a user visits, the display 104 displays an operational guidance to urge the user to insert an ID card, and the user inserts the ID card into the card reader 109. When the card reader 109 detects the insertion of the ID card (Step 302), the display 104 displays an acceptance of inputting a personal identification number (ID No.), and the touch panel 105 accepts the input of the personal identification number performed by the user (Step 303).

Next, the main control unit 101 of the registration apparatus 101 authenticates information of the ID card inserted in Step 302 and the personal identification number input in Step 303 (Step 304). When the authentication of the personal identification number fails (the personal identification number fails to match the information of the ID card), the ID card is returned (Step 322), and the processes of registration procedures are terminated. When the authentication of the personal identification number succeeds (the personal identification number matches the information of the ID card) in Step 304, the ID card is returned (Step 305), and the processes of registration procedures of finger vein information are continued.

Next, the display 104 displays a screen for instructing the user to set an identity verification document (for example, driver's license and the like) on the scanner 107 (Step 306). When the setting of the identity verification document is detected (detection by a sensor (not shown), or detection of a "setting completion" button on the touch panel 105 being pressed), the scanner 107 reads a face image included in the identity verification document that was set (Step 307). When the reading of the face image included in the identity verification document is completed, the face photography camera 108 photographs a face image of the user (Step 308). The main control unit 110 performs collation between the face image that was read in Step 307 and the face image that was photographed in Step 308 (Step 309) to determine whether or not the user is identified as one included in the identity verification document (Step 310). When it is determined that the user is not identified as one included in the identity verification document in Step 310, the registration processes are terminated. The determination on whether or not the user is identified as one included in the identity verification document is made by pattern matching between the outlines or portions of the respective face images and the like.

If it is determined that the user is identified as one in the identity verification document in Step 310, the display 104 displays a screen for allowing the user to select a finger (the kind of finger that is a region of a living body) whose finger vein information is registered (Step 311). When the finger to be registered is selected, the display 104 displays a screen for instructing the user to set the finger to the finger vein reader 102 (Step 312). If the setting of the finger to the finger vein reader 102 is detected (detection of the finger setting by a sensor (not shown), or detection of a "finger setting completion" button on the touch panel 105 being pressed), the hand photography camera 106 photographs an image of the finger vein reader 102 in a state where the finger is set thereto (Step 313). For example, Fig. 4b, to be described later, is the photographed image.

Next, the main control unit 110 compares the image of the finger vein reader 102 that was photographed in Step 301 with the image of the finger vein reader 102 that was photographed in Step 313 to discriminate the set finger (Step 314). The discrimination in Step 314 will be described in detail using Fig. 4. Next, the main control unit 110 determines whether or not the result of the discrimination in Step 314 matches the finger that was selected in Step 311 (Step 315). If both match, the display 104 displays a screen for a press instruction of the read button 103 for finger vein information (Step 316). If the read button is pressed, the finger vein reader 102 reads the finger vein information of the set finger (Step 317). Note that the read button 102 may be configured such that the read button displayed on the display 104 is pressed through the touch panel 105.

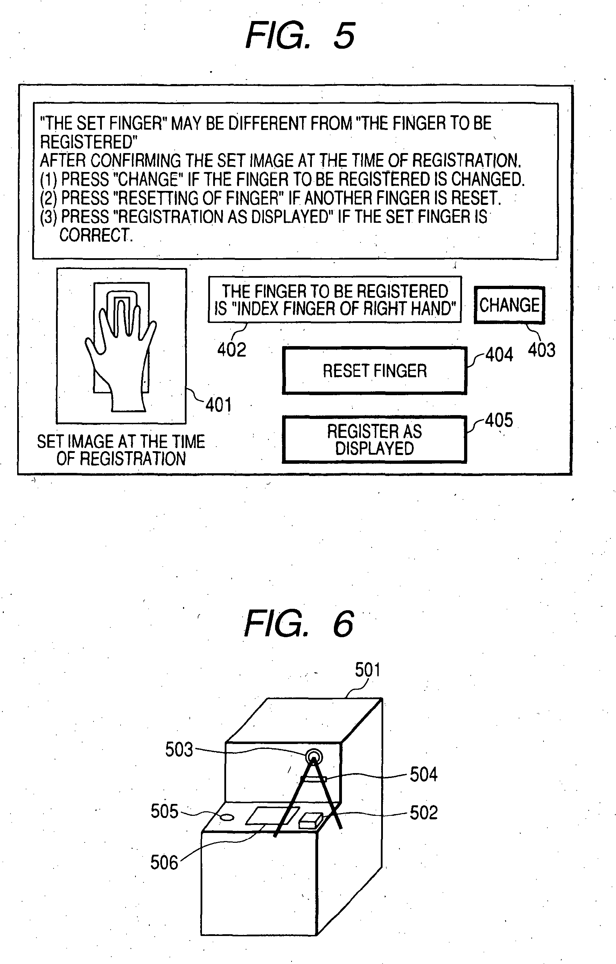

The finger vein information that was read in Step 316 and the finger information that was registered in Step 311 are stored in the IC card (Step 318), and the IC card is issued (Step 319). If it is determined in Step 315 that the result of the discrimination does not match the selected finger, the display 104 displays the image that was photographed in Step 313 and information on the finger (the finger to be registered) that was selected in Step 311 (Step 320). Then, the display 104 displays so that the user selects an item from among: continuation of registration of finger vein information as displayed; resetting of finger; and changing the finger to be registered for another finger (Step 321). These displays will be described later in the explanation of Fig. 5.

Figs. 4 show various patterns of images (images that the hand photography camera 106 photographs) representing the states of the finger vein reader 102 in Step 314 (the discrimination process of the set finger) of Fig. 3. There will be described detailed processes in which the main control unit 110 discriminates (the region whose biometric information was read) which finger the user set to the finger vein reader 102 is, i.e., of which finger the finger vein information read by the finger vein reader 102 is, by using these photographed images.

Fig. 4a shows the image (the image shown in a state where no finger is set to the finger vein reader 102) of the finger vein reader 102 that was photographed in Step 301 (a preliminary process of registration) of Fig. 3 as described above.

Fig. 4b shows the image photographed by the hand photography camera 106 in a state where the finger is set to the finger vein reader 102 in Step 313 of Fig. 3.

Fig. 4c shows a setting state extraction image that is produced by the main control unit 110 using both the image shown in Fig. 4a (in a state where no finger is set to the finger vein reader 102) and the image shown in Fig. 4b (in a state where the finger is set to the finger vein reader 102) such that both the images are compared with each other to obtain a difference.

Fig. 4d is a diagram showing calculation areas (region A and region B) to be used in calculation in the process (Step 314 of Fig. 3) of discriminating which finger is set on the basis of the setting state extraction image (Fig. 4c).

Figs. 4e to 4h respectively show, when the setting state extraction image (Fig. 4c) and the calculation areas (Fig. 4d) overlap with each other, a relation between the set finger and areas (represented as fA and fB) of the setting state extraction image that is included in the region A and region B, respectively. Specifically, (1) when fA is nearly 0 (Fig. 4e), it is discriminated that the index finger is set. (2) When fA is smaller than fB (Fig. 4f), it is discriminated that the middle finger is set. (3) When fA is larger than fB (Fig. 4g), it is discriminated that the annular finger is set. (4) When fB is nearly 0 (Fig. 4h), it is discriminated that the little finger is set. As described above, the set finger is discriminated based on the magnitude relation between fA and fB. In the embodiment, the explanation is made by taking the right hand as an example. However, the left hand may be utilized. In that case, since the relations between fA and fB of (1) to (4) become opposite, the results of discrimination also become opposite. Further, the discrimination method is not limited to this, but it is sufficient if the set finger can be associated from the image in a state where the finger is set to the finger vein reader 102 according to claims 1 and 6.

Fig. 5 shows a screen (Step 320) displayed on the display 104 when it is determined in Step 315 of Fig. 3 (determination on whether or not the result of the discrimination of the finger that was set in Step 312 matches the finger that was selected in Step 311) that the result of the discrimination does not match the selected finger. The case in which it is determined that the result of the discrimination does not match the selected finger in Step 315 means the case in which it is determined that there is a possibility that information of "the finger to be registered" selected by the user in Step 311 is different from "the finger that was actually set to the finger vein reader 102". In this case, the display 104 displays a screen as shown in Fig. 5. This screen is a screen for allowing the user to confirm the relation between the registered finger and the set finger. Fig. 5 includes an image 401 showing a state of the finger vein reader 102 photographed by the hand photography camera 106 in Step 313 and information 402 of "finger to be registered" that was selected in Step 311.

On the screen of Fig. 5, (1) the user presses a "change" button 403 if the registered finger information (the finger selected in Step 311) is changed. (2) The user presses a "resetting of finger" button 404 if another finger is reset to the finger vein reader 102. (3) The user presses a "registration as displayed" button 405 if the registered finger information and the set finger are correct and the finger vein information of the finger is registered. If it is determined that the "change" button 403 was pressed as stated in (1), the main control unit 110 displays the selection screen of "finger to be registered" shown in Step 311 and the registration apparatus 101 executes the processes after Step 311. If it is determined that the "resetting of finger" button 404 was pressed as stated in (2), the main control unit 110 displays the instruction screen of "setting the finger to the finger vein reader 102" shown in Step 312 and the registration apparatus 101 executes the processes after Step 312. If it is determined that the "registration as displayed" button 405 was pressed as stated in (3), the main control unit 110 displays the instruction screen of "pressing the read button" shown in Step 316 and the registration apparatus 101 executes the processes after Step 316.

In Fig. 3, the read process of the finger vein information (Step 317) is performed after the set finger is discriminated by comparing the hand image in a state where no finger is set to the finger vein reader 102 with the hand image in a state where the finger is set to the finger vein reader 102 (Steps 314 to 315). However, the finger vein information may be read by the finger vein reader 102 when or after the finger is set to the finger vein reader 102 and the hand image is read in a state where the finger is set to the finger vein reader 102 (Step 312 to 313). In that case, the determination (Steps 314 to 315) on whether or not the finger whose finger vein information was read matches the finger that was selected in Step 311 is made.

By registering the finger vein information in the above-described manner, it is possible to prevent that the finger vein information of a finger that is different from that to be registered is read and is registered in the IC card as it is.

Fig. 6 is an external view of an ATM 501 for performing collation between the finger vein information that was registered in advance and the finger vein information of the user. The ATM 501 is composed of a finger vein reader 502 for reading finger vein information of the user, a hand photography camera 503 for photographing an image in a state where a finger is set to the finger vein reader 502, a card reader 504 for reading an IC card to be inserted by the user, a read button 505 to be pressed when reading with the finger vein reader 502, and a display 506 for displaying an operational guidance of the ATM 501 and the like. If the registration apparatus 101 shown in Fig. 2 also performs collation processes of finger vein information, the ATM 501 of Fig. 5 may have the same configuration as the registration apparatus 101.

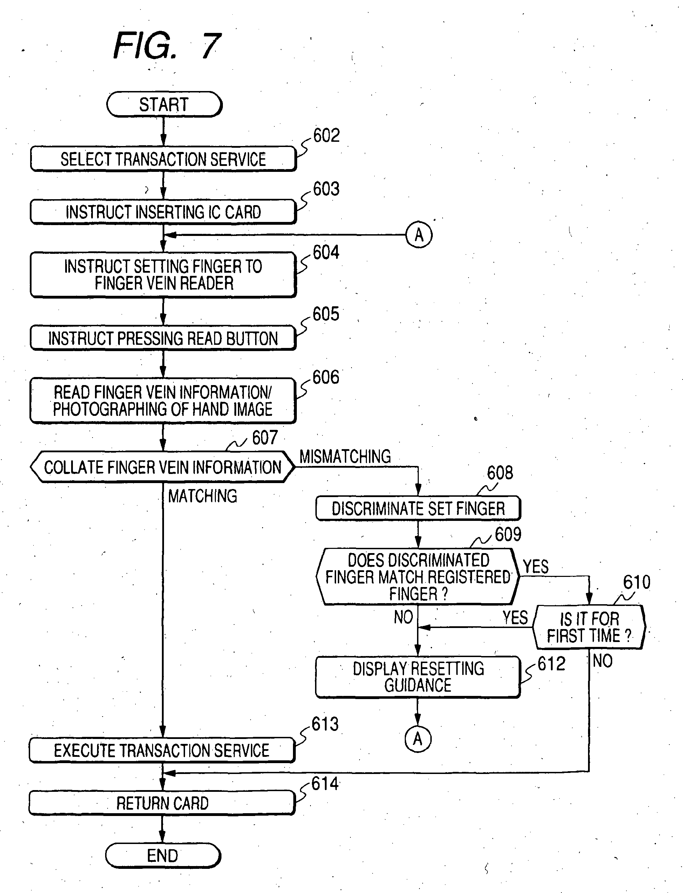

Fig. 7 shows a flow of collation processes of finger vein information performed by the ATM 501 shown in Fig. 6. First, the display 506 of the ATM 501 displays a screen for allowing the user to select a transaction service (Step 602). Next, if the selected transaction service is a transaction using an IC card, the display 506 displays such that the IC card is inserted to the IC card reader 504 (Step 603). When the IC card is inserted, the display 506 displays a screen for guiding the user to set a finger to the finger vein reader 502 (Step 604). If the finger is set, the display 506 displays a guidance screen to press the read button 505 (Step 605). If the read button 505 is pressed, the finger vein reader 502 reads the finger vein information of the set finger, and at the same time the hand photography camera 503 photographs an image in a state where the finger is set to the finger vein reader 502 (Step 606). There may be provided a step of inputting a personal identification number corresponding to the IC card before (or after) reading the finger vein information.

Next, the ATM 501 performs collation between the finger vein information stored in the IC card that was inserted in Step 603 and the finger vein information that was read by the finger vein reader 502 in Step 606 (Step 607). If the result of the collation shows matching, the ATM 501 executes the transaction service selected in Step 602 (Step 613), and after the transaction, the IC card is returned (Step 614). If the result of the collation in Step 607 shows mismatching, the ATM 501 discriminates the set finger on the basis of the hand image photographed by the hand photography camera 503 in Step 606 (Step 608). Here, the set finger is discriminated in the same way as the process in Step 314 of Fig. 3. Next, the ATM 501 determines whether or not the finger discriminated in Step 608 matches the finger information registered in the IC card that was inserted in Step 603 (Step 609).

If the result of the determination in Step 609 shows mismatching of the fingers, the display 506 displays a guidance to reset the finger (or another finger) to the finger vein reader 502 (Step 612). If the result of the determination in Step 609 shows matching of the fingers, it is determined whether the present collation process of the finger vein information is for the first time or later (Step 610). If the present collation process is for the first time, the display 506 displays so as to reset the finger (Step 612). If the present collation process is for the second time or later, the card is returned without performing any transactions (Step 614) and the processes are terminated.

Although the example of utilizing the finger vein information as biometric information has been explained in the embodiment, the present invention is not limited to the finger vein information. In an example not forming an embodiment of the invention, an apparatus for registering a palm vein as biometric information is disclosed. Thereby, it is possible to prevent a wrong registration due to differences between right and left hands.

According to the embodiment above mentioned, a registration can be performed while biometric information is correctly associated with a region.

## Claims

1. A biometric information registration apparatus for registering biometric information of a user, said biometric information being finger vein information or fingerprint information, the apparatus comprising:
first read means (102) for reading the biometric information of the user;
input means (105) for accepting a selection of a finger whose biometric information is to be registered;
first photography means (106) for photographing an image of the first read means (102) in a state where the finger of the user is set; and
control means (110),
**characterised in that** said control means (110) is adapted to
discriminate which of the fingers set to the first read means (102) on the basis of dimensions of two areas (fA, fB) which are occupied by a plurality of fingers within two calculation areas (A, B) in the image photographed by the first photography means (106) and which get a value larger than zero when there is an overlap between one of the two calculation areas (A, B) and the image of the state in which the finger of the user is set, wherein the two calculation areas (A, B) are located in the region where the fingers are expected when the user's hand is set, and wherein there is a gap between the two calculation areas (A, B) and
determine whether or not the discriminated finger matches the selected finger.

2. The apparatus of claim 1, further comprising:
second read means (109) for reading a certificate relating to the user; and
second photography means (108) for photographing a face image of the user,
wherein the control means (110) is adapted to perform collation between a face image of the user included in the certificate that is read by the second read means (109) and the face image photographed by the second photography means (108).

3. The apparatus of claim 1 or 2, wherein when the discriminated finger matches the selected finger, an IC card in which the biometric information read by the first read means (102) is stored is issued.

4. The apparatus of any preceding claim, further comprising display means (104) for displaying the discriminated finger and information relating to the selected finger.

5. The apparatus of claim 4, wherein when a result of the determination shows that the discriminated finger is different from the selected finger, the display means (104) is adapted to display
a guidance of resetting the finger to be registered to the first read means (102), and/or
the image photographed by the first photography means (106), and/or
an input screen to change the finger to be registered.

6. A biometric information registration method of registering biometric information of a user, said biometric information being finger vein information or fingerprint information, the method comprising the steps of:
accepting an input of a selection of a finger whose biometric information is to be registered;
photographing an image in a state where the finger of the user is set when the biometric information of the user is read;
discriminating which of the finger is set on the basis of dimensions of two areas (fA, fB) which are occupied by a plurality of fingers within two calculation areas (A, B) in the photographed image and which get a value larger than zero when there is an overlap between one of the two calculation areas (A, B) and the image of the state in which the finger of the user is set, wherein the two calculation areas (A, B) are located in the region where the fingers are expected when the user's hand is set, and wherein there is a gap between the two calculation areas (A, B); and
determining whether or not the discriminated finger matches the selected finger.

7. The method of claim 6, further comprising the step of reading the biometric information of the set finger when a result of the determination shows that the discriminated finger matches the selected finger.

8. The method of claim 6 or 7, further comprising the step of displaying the photographed image when a result of the determination shows that the discriminated finger is different from the selected finger.

9. The method of any of claims 6 to 8, further comprising the step of displaying a screen for accepting an input of changing the selection of the finger whose biometric information is registered when a result of the determination shows that the discriminated finger is different from the selected finger.

## Patentansprüche

1. Biometrieinformationen-Aufzeichnungsgerät zum Aufzeichnen biometrischer Informationen eines Benutzers, wobei die biometrischen Informationen Fingerveneninformationen oder Fingerabdruckinformationen sind, mit
einer ersten Leseeinrichtung (102) zum Lesen der biometrischen Informationen des Benutzers,
einer Eingabeeinrichtung (105) zur Annahme einer Auswahl eines Fingers, dessen biometrische Informationen aufzuzeichnen sind,
einer ersten Fotografieeinrichtung (106) zum Fotografieren eines Bildes der ersten Leseeinrichtung (102) in einem Zustand, in dem der Finger des Benutzers angelegt ist, und
einer Steuereinrichtung (110),
**dadurch gekennzeichnet, dass** die Steuereinrichtung (110) dazu ausgelegt ist,
auf Basis von Abmessungen von zwei Flächen (fA, fB), die durch mehrere Finger innerhalb zweier Berechnungsflächen (A, B) auf dem durch die erste Fotografieeinrichtung (106) fotografierten Bild überdeckt sind, und die einen Wert größer als 0 annehmen, wenn es zu einer Überlappung zwischen einer der zwei Berechnungsflächen (A, B) und dem Bild des Zustands kommt, in dem der Finger des Benutzers angelegt ist, zu erkennen, welcher der Finger an der ersten Leseeinrichtung (102) angelegt ist, wobei die zwei Berechnungsflächen (A, B) in der Region angeordnet sind, wo die Finger erwartet werden, wenn die Hand des Benutzers angelegt ist, und wobei eine Lücke zwischen den zwei Berechnungsflächen (A, B) besteht, und
festzustellen, ob der erkannte Finger mit dem ausgewählten Finger übereinstimmt.

2. Gerät nach Anspruch 1, ferner mit
einer zweiten Leseeinrichtung (109) zum Lesen eines Zertifikats für den Benutzer und
einer zweiten Fotografieeinrichtung (108) zum Fotografieren eines Gesichtsbilds des Benutzers,
wobei die Steuereinrichtung (110) dazu ausgelegt ist, einen Vergleich zwischen einem in dem Zertifikat enthaltenen Gesichtsbilds des Benutzers, das durch die zweite Leseeinrichtung (109) eingelesen wurde, und dem durch die zweite Fotografieeinrichtung (108) fotografierten Gesichtsbild vorzunehmen.

3. Gerät nach Anspruch 1 oder 2, wobei, wenn der erkannte Finger mit dem ausgewählten Finger übereinstimmt, eine Chipkarte ausgegeben wird, auf der die durch die erste Leseeinrichtung (102) ausgelesenen biometrischen Informationen gespeichert sind.

4. Gerät nach einem der vorstehenden Ansprüche, ferner mit einer Anzeigeeinrichtung (104) zum Anzeigen des erkannten Fingers und von Informationen zu dem ausgewählten Finger.

5. Gerät nach Anspruch 4, wobei, wenn ein Ergebnis der Feststellung zeigt, dass der erkannte Finger von dem ausgewählten Finger verschieden ist, die Anzeigeeinrichtung (104) dazu ausgelegt ist, anzuzeigen:
eine Anleitung zum erneuten Anlegen des aufzuzeichnenden Fingers an die erste Leseeinrichtung (102), und/oder
das durch die erste Fotografieeinrichtung (106) fotografierte Bild, und/oder
einen Eingabebildschirm zum Ändern des aufzuzeichnenden Fingers.

6. Biometrieinformations-Aufzeichnungsverfahren zum Aufzeichnen von biometrischen Informationen eines Benutzers, wobei die biometrischen Informationen Fingerveneninformationen oder Fingerabdruckinformationen sind, wobei in dem Verfahren
eine Eingabe einer Auswahl eines Fingers angenommen wird, dessen biometrische Informationen aufzuzeichnen sind,
ein Bild in einem Zustand fotografiert wird, in dem der Finger des Benutzers angelegt ist, wenn die biometrischen Informationen des Benutzers gelesen werden,
auf Basis von Abmessungen von zwei Flächen (fA, fB), die durch mehrere Finger innerhalb zweier Berechnungsflächen (A, B) auf dem fotografierten Bild überdeckt sind, und die einen Wert größer als 0 annehmen, wenn es zu einer Überlappung zwischen einer der zwei Berechnungsflächen (A, B) und dem Bild des Zustands kommt, in dem der Finger des Benutzers angelegt ist, erkannt wird, welcher der Finger angelegt ist, wobei die zwei Berechnungsflächen (A, B) in der Region angeordnet sind, wo die Finger erwartet werden, wenn die Hand des Benutzers angelegt ist, und wobei eine Lücke zwischen den zwei Berechnungsflächen (A, B) besteht, und
festgestellt wird, ob der erkannte Finger mit dem ausgewählten Finger übereinstimmt.

7. Verfahren nach Anspruch 6, in dem ferner die biometrischen Informationen des angelegten Fingers gelesen werden, wenn ein Ergebnis der Feststellung zeigt, dass der erkannte Finger mit dem ausgewählten Finger übereinstimmt.

8. Verfahren nach Anspruch 6 oder 7, in dem ferner das fotografierte Bild angezeigt wird, wenn ein Ergebnis der Feststellung zeigt, dass der erkannte Finger sich von dem ausgewählten Finger unterscheidet.

9. Verfahren nach einem der Ansprüche 6 bis 8, in dem ferner ein Bildschirm zum Annehmen einer Eingabe zur Änderung der Auswahl des Fingers angezeigt wird, dessen biometrische Informationen aufgezeichnet werden, wenn ein Ergebnis der Feststellung zeigt, dass der erkannte Finger sich von dem ausgewählten Finger unterscheidet.

## Revendications

1. Appareil d'enregistrement d'informations biométriques pour enregistrer des informations biométriques d'un utilisateur, lesdites informations biométriques étant des informations de veines d'un doigt ou des informations d'empreinte digitale, l'appareil comportant :
des premiers moyens de lecture (102) pour lire les informations biométriques de l'utilisateur,
des moyens d'entrée (105) pour accepter une sélection d'un doigt dont les informations biométriques doivent être enregistrées,
des premiers moyens de photographie (106) pour photographier une image des premiers moyens de lecture (102) dans un état où le doigt de l'utilisateur est défini, et
des moyens de commande (110),
**caractérisé en ce que** lesdits moyens de commande (110) sont adaptés pour
discriminer lequel des doigts est défini dans les premiers moyens de lecture (102) sur la base de dimensions de deux zones (fA, fB) qui sont occupées par une pluralité de doigts au sein de deux zones de calcul (A, B) dans l'image photographiée par les premiers moyens de photographie (106) et qui obtiennent une valeur supérieure à zéro lorsqu'il existe un chevauchement entre l'une des deux zones de calcul (A, B) et l'image de l'état dans lequel le doigt de l'utilisateur est défini, dans lequel les deux zones de calcul (A, B) sont localisées dans la région où les doigts sont attendus lorsque la main de l'utilisateur est définie, et dans lequel il existe un espace entre les deux zones de calcul (A, B), et
déterminer si oui ou non le doigt discriminé correspond au doigt sélectionné.

2. Appareil selon la revendication 1, comportant en outre :
des seconds moyens de lecture (109) pour lire un certificat concernant l'utilisateur, et
des seconds moyens de photographie (108) pour photographier une image du visage de l'utilisateur,
dans lequel les moyens de commande (110) sont adaptés pour effectuer un regroupement entre une image du visage de l'utilisateur comprise dans le certificat qui est lu par les seconds moyens de lecture (109) et l'image du visage photographiée par les seconds moyens de photographie (108).

3. Appareil selon la revendication 1 ou 2, dans lequel lorsque le doigt discriminé correspond au doigt sélectionné, une carte IC dans laquelle les informations biométriques lues par les premiers moyens de lecture (102) sont mémorisées est émise.

4. Appareil selon l'une quelconque des revendications précédentes, comportant en outre des moyens d'affichage (104) pour afficher le doigt discriminé et des informations concernant le doigt sélectionné.

5. Appareil selon la revendication 4, dans lequel lorsque un résultat de la détermination montre que le doigt discriminé est différent du doigt sélectionné, les moyens d'affichage (104) sont adaptés pour afficher :
un guide de réinitialisation du doigt à enregistrer dans les premiers moyens de lecture (102), et/ou
l'image photographiée par les premiers moyens de photographie (106),
et/ou un écran d'entrée pour changer le doigt à enregistrer.

6. Procédé d'enregistrement d'informations biométriques consistant à enregistrer des informations biométriques d'un utilisateur, lesdites informations biométriques étant des informations de veines d'un doigt ou des informations d'empreinte digitale, le procédé comportant les étapes consistant à :
accepter une entrée d'une sélection d'un doigt dont les informations biométriques doivent être enregistrées,
photographier une image d'un état dans lequel le doigt de l'utilisateur est défini lorsque les informations biométriques de l'utilisateur sont lues,
discriminer lequel des doigts est défini sur la base de dimensions de deux zones (fA, fB) qui sont occupées par une pluralité de doigts au sein de deux zones de calcul (A, B) dans l'image photographiée et qui obtiennent une valeur supérieure à zéro lorsqu'il existe un chevauchement entre l'une des deux zones de calcul (A, B) et l'image de l'état dans lequel le doigt de l'utilisateur est défini, dans lequel les deux zones de calcul (A, B) sont localisées dans la région où les doigts sont attendus lorsque la main de l'utilisateur est définie, et dans lequel il existe un espace entre les deux zones de calcul (A, B), et
déterminer si oui ou non le doigt discriminé correspond au doigt sélectionné.

7. Procédé selon la revendication 6, comportant en outre l'étape consistant à lire les informations biométriques du doigt défini lorsque un résultat de la détermination montre que le doigt discriminé correspond au doigt sélectionné.

8. Procédé selon la revendication 6 ou 7, comportant en outre l'étape consistant à afficher l'image photographiée lorsque un résultat de la détermination montre que le doigt discriminé est différent du doigt sélectionné.

9. Procédé selon l'une quelconque des revendications 6 à 8, comportant en outre l'étape consistant à afficher un écran pour accepter une entrée de changement de la sélection du doigt dont les informations biométriques sont enregistrées lorsque un résultat de la détermination montre que le doigt discriminé est différent du doigt sélectionné.
